(19)

Europäisches
Patentamt
European
Patent Office
Office européen
des brevets

(11) **EP 4 109 348 A1**

(12) **EUROPEAN PATENT APPLICATION**

(43) Date of publication:
**28.12.2022 Bulletin 2022/52**

(21) Application number: **21181822.4**

(22) Date of filing: **25.06.2021**

(51) International Patent Classification (IPC):
**G06N 3/08** (2006.01)      **G06N 5/02** (2006.01)
**G06N 5/04** (2006.01)

(52) Cooperative Patent Classification (CPC):
**G06N 5/042; G06N 3/084; G06N 5/022;
G06N 5/046**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
- **Domokos, Csaba
  75397 Simmozheim (DE)**
- **Stepanova, Daria
  71272 Renningen (DE)**
- **Andresel, Medina
  1020 Vienna (AT)**
- **Tran, Trung Kien
  89073 Ulm (DE)**

(54) **A DEVICE, A COMPUTER PROGRAM AND A COMPUTER-IMPLEMENTED METHOD FOR TRAINING A KNOWLEDGE GRAPH EMBEDDING MODEL**

(57)     Device, computer program, computer-implemented method for training a knowledge graph embedding model (208) of a knowledge graph (200) that is enhanced by an ontology (202), wherein the method comprises training (2) the knowledge graph embedding model (208) with a first training query and its predetermined answer to reduce, in particular minimize, a distance between an embedding of the answer in the knowledge graph embedding model (208) and an embedding of the first training query in knowledge graph embedding model (208), and to reduce, in particular minimize, a distance between the embedding of the answer and an embedding of a second training query in knowledge graph embedding model (208), wherein the second training query is determined (1) from the first training query depending on the ontology (202).

**Fig. 2**

**Description**

Background

The invention relates to a device, a computer program and a computer-implemented method for training a knowledge graph embedding model.

A knowledge graph embedding model may be trained to provide an answer to a query. It is desirable to provide a method that has a systematic way of answering queries over incomplete knowledge graphs.

Disclosure of the invention

A computer-implemented method for training a knowledge graph embedding model of a knowledge graph that is enhanced by an ontology, comprises training the knowledge graph embedding model with a first training query and its predetermined answer to reduce, in particular minimize, a distance between an embedding of the answer in the knowledge graph embedding model and an embedding of the first training query in knowledge graph embedding model, and to reduce, in particular minimize, a distance between the embedding of the answer and an embedding of a second training query in knowledge graph embedding model, wherein the second training query is determined from the first training query depending on the ontology. The second training query is a specialization of a predetermined query that has an answer in the knowledge graph. This allows training the knowledge graph embedding model for answering conjunctive queries over incomplete knowledge graphs. The training relies not only on the original knowledge graph, but also on the ontology that accompanies the knowledge graph. The embedding of the second training query accounts for ontological axioms that were used for determining the second training query.

For sampling the first training query, the method may comprise determining a set of possible monadic consecutive queries that are consistent according to the ontology and a set of entities and a set of relations of the knowledge graph, and selecting the first training query from the set of monadic consecutive queries. Instead of sampling queries for training randomly a method for strategic sampling of queries relying on ontology is provided.

The method may comprise determining the first training query according to a predetermined query shape. Instead of sampling queries randomly, queries according to the predetermined query shape are considered. Randomly selected examples might not include any queries that are related to each other based on the ontology. This is avoided with the ontology-based sampling.

The method may comprise sampling, in particular randomly, a query, determining a generalization of the query with the ontology, and determining the second training query from the generalization, in particular a specialization of the generalization. The generalization describes a plurality of specializations and allows to determine many different training queries that are similar to the first training query according to the ontology.

The method may comprise providing a generalization depth and determining generalizations of the query up to the generalization depth and/or providing a specialization depth and determining specializations of the query up to the specialization depth. This is practically for limiting the computational effort.

The method may comprise by providing an answer to a conjunctive query with the knowledge graph embedding model.

The method may comprise training the knowledge graph embedding to increase, in particular maximize, a distance between the embedding of the first training query and at least one embedding of a predetermined entity that is not an answer to the first training query and/or to increase, in particular maximize, a distance between the embedding of the second training query and at least one embedding of a predetermined entity that is not an answer to the second training query. This way, the training results in the embedding of the first training query being closer to the embedding of its answers than to its non-answers.

A device for training the knowledge graph embedding model of the knowledge graph that is enhanced by the ontology, is configured to perform steps in the method.

A computer program comprises computer readable instructions that, when executed by a computer, cause the computer to perform the method.

Further advantageous embodiments are derivable from the following description and the drawing. In the drawing

Fig. 1 depicts a knowledge graph pattern,
Fig. 2 depicts a method for training a knowledge graph embedding for the knowledge graph,
Fig. 3 depicts a device for training the knowledge graph embedding for the knowledge graph.

A Knowledge Graph, KG, comprises a set of entities and a set of relations. The KG describes facts about a certain domain of interest by representing the facts with at least one entity of the set of entities that is interconnected via at least one relation of the set of relations to at least one other entity of the set of entities.

In a KG representation, an entity is represented by a node of the KG and a relation between two entities is represented by an edge of the KG between these nodes.

A fact is a triple of a subject, a predicate and an object. In the KG, the subject is an entity, the object is an entity and the predicate is a relation.

In a Knowledge Graph Embedding, KGE, of the KG, an entity is represented by an embedding. In the KGE, a relation is represented by an embedding. A triple of an embedding of the subject, an embedding of the predicate and an embedding of the object of a fact represents the fact in the KGE.

The KG may be used to predict a relation between a first given entity and a second given entity. The relation may be selected from the set of relations depending on a score. The score may be determined with a score function that maps an embedding of the first entity in the KGE, an embedding of the second entity in the KGE and an embedding of the relation in the KGE to the score.

The embedding may be vectors in a vector space. Determining the score with the score function may comprise determining a vector sum. Determining the vector sum may comprise adding a vector representing the relation to a vector representing the first entity. Determining the score may comprise determining a distance of the vector sum to a vector representing the second entity.

The embedding of the entities may be vectors in a first vector space. The embedding of the relations may be vectors in a second vector space. Determining the score may comprise determining a mapping of a first vector representing the first entity in the first vector space to a first vector in the second vector space. Determining the score may comprise determining a mapping of a second vector representing the second entity in the first vector space to a second vector in the second vector space. Determining the score with the score function may comprise determining a vector sum. Determining the vector sum may comprise adding a vector representing the relation in the second vector space to the first vector. Determining the score may comprise determining a distance of the vector sum to the second vector.

In an example, the distance is a Euclidean distance.

For predicting the relation with the KG, an input that comprises two given entities may be mapped to an output that comprises the relation. The relation may be selected from the set of relations. In an example, the relation that is selected, results in a higher score than at least another relation of the set of relations. Preferably the relation is selected that results in the highest score of the relations in the set of relations.

A neural network may be trained to represent the KGE. The neural network may be trained with training data that comprises triples of embedding. The training data may comprise triples that represent true facts of the KG. The training data may comprise triples that represent triples that are not true facts of the KG.

The neural network may be trained to map a first embedding of a given first entity and a second embedding of a given second entity of the set of entities to a score per relation of the set of relations. The score of a relation represents a probability for the relation that this relation is the relation between the given first entity and the given second entity.

The neural network may be trained to map an embedding of a given entity and an embedding of a given relation of the set of relations to a score per entity of the set of entities. The score of an entity represents a probability for the entity that this entity is the entity that has the given relation to the given entity.

KGs are widely used for natural question answering, web search and data analytics. KGs store information about millions of facts.

KGs may be constructed automatically, semi-automatically or at least partly manually for example by using crowd-sourcing methods.

In a training, the KG or the KGE, in particular the neural network, can be trained with training data to represent the knowledge that is available. The training data may comprise positive triples that represent true facts and negative triples that represent incorrect facts.

The KG or the KGE, in particular the neural network, may be trained with positive triples and negative triples.

The method discerns between correct, i.e. positive, and incorrect, i.e. negative triples.

The KG represents interlinked collections of factual information. The KG may be encoded as a set of (subject; predicate; object) triples, e.g., (john; worksAt ; bosch). Subjects or objects of such triples are referred to as entities and predicates are referred to as relations. The set of triples of a KG can be represented as a directed graph, whose vertices and edges are labeled. KG triples are referred to as facts. KG facts may be represented as unary or binary ground predicates as follows: man(john), worksAt(john; bosch).

In the example, a signature $\Sigma_G = \langle \varepsilon, R \rangle$ of a KG $G$ defines a set of entities $\varepsilon$ and a set of relations $R$ appearing in $G$. Relations $R$ in the signature $\Sigma_G$ represent predicates, i.e. edges of the KG. Constants in the signature $\Sigma_G$ represent entities $\varepsilon$, i.e. nodes of the KG, or relations $R$.

The KGE concerns with embedding KG entities and relations into continuous vector spaces with a user-specified dimension n. More specifically, KGE models take as input a set of KG triples and aim at mapping the entities and relations into the n-dimensional vector space such that some features reflecting the KG structure are preserved. These features are captured by the objective function of the respective KGE model. This way from relational data, a set of numerical vectors is obtained.

An Ontology is a conceptualization of a domain of interest represented as a set of axioms. The ontology reflects a schema that the KG should follow, for example:

$$O = \left\{ \begin{array}{c} worksAt(X,Y), \\ type(Y, company) \rightarrow type(X, employee); \\ managerAt(X,Y) \rightarrow worksAt(X,Y) \end{array} \right\}$$

The first axiom states that those who work in companies are employees, while the second axiom specifies that the relation managerAt is more specific than the relation worksAt.

We rely on ontologies in $DL$ - $lite_A$ according to Artale, A., Calvanese, D., Kontchakov, R., Zakharyaschev, M.: The DL-lite family and relations. CoRR abs/1401.3487 (2014) without existential restrictions on the right-side of the rules. An overview of exemplary rule forms that are supported is:

(1) $type(X, A) \rightarrow type(X, B)$
(2) $p(X, Y) \rightarrow type(X, A)$
(3) $p(X, Y) \rightarrow type(Y, A)$
(4) $p(X, Y) \rightarrow s(X, Y)$
(5) $p(X, Y) \rightarrow s(Y, X)$

A Conjunctive Query is an expression of the form $q(X_1, X_2, ... , X_k) \leftarrow B$ or $\langle X_1, X_2, ... , X_k \rangle \leftarrow B$, where $B$ is the body as defined in rules, and $X_1, X_2, ..., X_k$ are answer variables, i.e., variables holding the answers of the query. Monadic CQs are CQ with a single answer variable.

For the KG and the ontology $0$ a Certain answer to a CQ is an answer obtained over the KG enriched with all facts that follow from the KG and the ontology $0$.

An information need that is formulated by users in a natural language is translated into such formal CQ using, e.g. a method disclosed in Yahya, M., Berberich, K., Elbassuoni, S., Ramanath, M., Tresp, V., Weikum, G.: Deep answers for naturally asked questions on the web of data. In: Proceedings of the 21st World Wide Web Conference, WWW 2012, Lyon, France, April 16-20, 2012 (Companion Volume). pp. 445-449 (2012). For example, for a KG storing information about people and their working places, a user might be interested in all people working at Bosch in some IT department. Formally, such query should be formulated as:

$Q(X) \leftarrow worksAt(X, bosch); employedIn(X, Y); type(Y, it\_department)$

which is a monadic CQ.

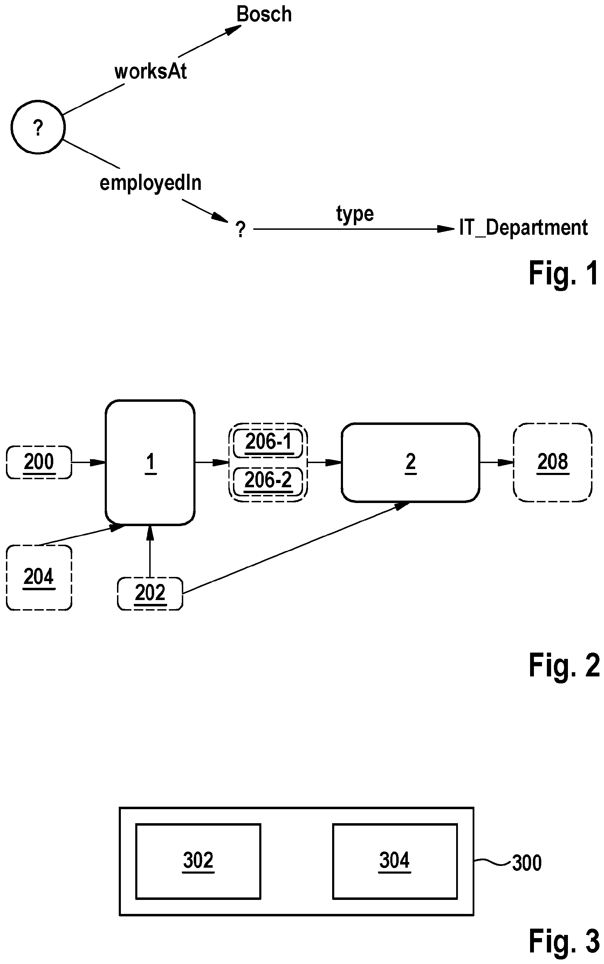

Conjunctive queries can be naturally represented as KG patterns. An exemplary KG pattern is depicted in Figure 1 for a KG pattern corresponding to the above query.

Below, a method for answering CQs over incomplete KGs is described. The method that relies not only on the original KG, but also on the ontology 0 that the KG accompanies.

The method comprises an ontology-based training strategy and extends a loss function that allows to account for ontological axioms and uses the extended loss function. Such loss function is for example described in Ren, H., Hu, W., Leskovec, J.: Query2box: Reasoning over knowledge graphs in vector space using box embedding. In: ICLR. OpenReview.net (2000).

Entities are embedded as points in a d-dimensional vector space.

Queries are embedded as boxes. Box in this context refers to an axis-aligned hyper-rectangle in the d-dimensional vector space.

A d-dimensional embedding for $(\Sigma G; Q_G)$ is a function $F$ that maps $c \in \varepsilon$ to $c \in R^d$ and $q \in Q_G$ to

$q = (cen_q, off_q) \subseteq R^d \times R^d_{\geq 0}$, wherein the signature $\Sigma_G$ is a given signature $\Sigma_G = \langle \varepsilon, R \rangle$ of the KG $G$, and $Q_G$ is a set of monadic CQs over the signature $\Sigma_G$, and $cen_q$ is a center of the box and $off_q$ is an offset of the box $cen_q$. Any point of the d-dimensional vector space that is within the distance $off_q$ to the center of the box $cen_q$ is considered to be inside the box.

An ontological rule $B_1, ..., B_n \rightarrow H$ can be injected into the KGE model, if the KGE model can be configured to force $H$ to hold, whenever $B_1, ..., B_n$ holds.

The method aims at embedding a CQ subject to a condition that a set of points inside a query box corresponds to a set of answer entities of the CQ. Since for every ontological rule the left-hand side and right-hand side of the rule can be turned into a query, injecting the ontology into the KGE model amounts to ensuring the inclusion of the boxes corresponding to the respective queries into one another.

The method is explained further with reference to figure 2.

Input to the method is a KG 200 and an ontology 202. Optionally a query depth 204 is provided as will be described below.

The training is based on positive samples 206-1 and negative samples 206-2. In the training, a KGE model 208 is trained.

The method comprises a step 1.

The step 1 comprises determining a positive sample and a negative sample.

The positive sample comprises a training query and its answer. The training query is determined according to a training strategy that is described below. The negative sample is structured like the positive sample and in particular randomly sampled from the KG.

In the example a plurality of positive samples and a plurality of negative samples is determined.

Afterwards a step 2 is executed.

The step 2 comprises training the KGE model 208 with the positive sample and the negative sample. The KGE model 208 is trained in the example with the plurality of positive samples and the plurality of negative samples.

A training objective, in particular a loss function for training the KGE model 208 is described below.

The KGE model computed as a result of step 2 may be used for answering CQs.

The training strategy exploited in step 1 considers a set $Q_G$ of possible monadic CQs that can be formed using predicates and constants in the signature $\Sigma_G$ of the KG 200. Preferably, all possible monadic CQs are considered.

This means, the method may comprise determining the training query from the set $Q_G$ of possible monadic consecutive queries that can be formed by the ontology, i.e. according to the ontology, using a set of entities and a set of relations appearing in the knowledge graph 200.

Below, three examples for determining the training query in an ontology-guided manner are described.

Certain answer based sampling:

The certain answer based sampling comprises sampling queries randomly and using them in the training along with their certain answers rather than standard answers.

If the ontology contains axioms in a language for which query answering can be done efficiently, then the generation of training queries along with their certain answers is feasible in practice. An exemplary language for certain answer based sampling is disclosed in Artale, A., Calvanese, D., Kontchakov, R., Zakharyaschev, M.: The dl-lite family and relations. CoRR abs/1401.3487 (2014).

By way of example, it is assumed that the KG 200 stores following facts:

*hasAlumnus(u1, pete);*
*worksFor(pete, ibm);*
*hasAlumnus(u1, john);*
*managerAt(john, bosch)*

and the ontology *0* contains a rule:

*managerAt(X, Y) → worksAt(X, Y)*

and a given in particular randomly selected query:

*q1 (X) ← hasAlumnus(u1, X)^worksFor(X, Y)*

its certain answers are:

{john, pete}

In the example, this query and its certain answers define the positive sample for training step 2.

Query-rewriting based sampling:

The query-rewriting based sampling adds to the set of randomly sampled queries also their specializations and generalizations. The specializations of a query are obtained accounting for the ontology *0*. The generalizations of a query are obtained accounting for the ontology *0*.

The specializations of a given query *q* are denoted as *Spec(q)* below. The specializations incorporate information that could be useful for the construction of the answers to the query *q*. The generalizations of the given query *q* is denoted as *Gen(q)*. The generalizsations incorporate additional related entities which could potentially be plausible missing answers.

Exemplary rules for obtaining generalizations

$$\xrightarrow{g}$$

and specializations

$$\xrightarrow{s}$$

of queries are:

$$(R1)\ type(X,A) \to type(X,B) \in O\ then\ \alpha \wedge type(T,B) =^s> \alpha \wedge type(T,A)$$

$$\alpha \wedge type(T,A) =^g> \alpha \wedge type(T,B)$$

$$(R2)\ p(X,Y) \to type(X,A) \in O \quad then\ \alpha \wedge type(T,A) \xrightarrow{S} \alpha \wedge p(T,Z)$$

$$\alpha \wedge p(T_1,T_2) \xrightarrow{g} \alpha \wedge type(T_1,A)$$

$$(R3)\ p(X,Y) \to type(Y,A) \in O \quad then\ \alpha \wedge type(T,A) \xrightarrow{S} \alpha \wedge p(Z,T)$$

$$\alpha \wedge p(T_1,T_2) \xrightarrow{g} \alpha \wedge type(T_2,A)$$

$$(R4)\ p(X,Y) \to s(X,Y) \in O \quad then\ \alpha \wedge s(T_1,T_2) \xrightarrow{S} \alpha \wedge p(T_1,T_2)$$

$$\alpha \wedge p(T_1,T_2) \xrightarrow{g} \alpha \wedge s(T_1,T_2)$$

$$(R5)\ s(X,Y) \to p(Y,X) \in O \quad then\ \alpha \wedge p(T_1,T_2) \xrightarrow{S} \alpha \wedge s(T_2,T_1)$$

$$\alpha \wedge s(T_1,T_2) \xrightarrow{g} \alpha \wedge p(T_2,T_1)$$

$$(R6)\ \theta \to vars(q) \cup E \quad then\ \alpha \wedge p(T_1,T_2) \wedge p(T'_1,T'_2) \in q \xrightarrow{S} \alpha\theta \wedge p(T_1,T_2)\theta$$

$$s.t.\ \theta(T_1) = \theta(T'_1) \qquad then\ \alpha \wedge p(T_1,T_2)\ s.t.\ T_1 or\ T_2 \in E \xrightarrow{g} \alpha\ p(Z,T_2) or\ \alpha \wedge p(T_1,Z)$$

By way of example, given the axioms:

*type(X, assist_prof)* → *type(X, professor); teachesAt(X, Y)* → *worksAt(X, Y)*

and the query:

$$q(X)\ \leftarrow\ type(X, assist\_prof)\ \wedge\ worksFor(X,Y)$$

the first rule R1 yields:

$$q'(X) \leftarrow type(X, professor) \wedge worksFor(X, Y)$$

as the generalization of the query q and the third rule R3 yields:

$$q''(X) \leftarrow type(X, assist\_prof) \wedge teachesAt(X, Y)$$

as the specialization of *q'*.

The method may comprise randomly sampling a plurality of queries along with their generalizations and specializations and use the plurality of queries and their generalizations and specializations to construct training samples.

To reduce the computational effort, the method may comprise providing a generalization depth $k_g$ and/or a specialization depth $k_s$ up to which the training queries are generated. In the example the query depth 204 input to the method defines the generalization depth $k_g$ and/or the specialization depth $k_s$.

Adding generalizations and specializations to random queries allows to capture some parts of the ontological background knowledge.

Strategic ontology-based training:

The strategic ontology-based training aims at finding relevant queries based on the ontology *0*.

The method may comprise generating the training queries by relying on the ontology *0*.

A set of target queries is formalized by means of a directed acyclic graph (*N, E*), where *N* is a set of nodes and *E* is a set of directed edges. Such directed acyclic graph, DAG, captures a shape of a query. The shape may be instantiated with a set of relations *R* and constants from the signature $\Sigma_G$. The signature $\Sigma_G$ may further comprise symbols, e.g. relation symbols or variables for relations *R* or entites $\varepsilon$ that are to be determined yet. Then, the set of target queries is obtained by applying a labeling function *f* to assign symbols in the signature $\Sigma_G$ to nodes and edges of the KG.

In the example, a query shape *S* is a tuple (*N, E, A, n*) such that (*N, E*) is a DAG and $n \in N$ is a distinguished node of S and $A \subseteq N$ denotes the set of anchor nodes in *S*. For a given set of relations and constants from the signature $\Sigma_G$, a labeling function *f* is a mapping from *N* U *E* to $\Sigma_G$ U *V*, where *V* is a set of variables such that each anchor node is mapped to a constant, each non-anchor node is mapped to either a variable or a constant and each edge to a relation symbol in signature $\Sigma_G$.

Given the signature $\Sigma_G$ and the query shape *S*, a set of CQs is $Q_S^{\Sigma_G}$ with

$$q\big(f(n)\big) \leftarrow \exists f(n_1), \ldots, f(n_1) \bigwedge_{e_i = (n, n') \in E} f(e_1)\big(f(n), f(n')\big)$$

In the example, the labeling function *f* is determined with the following sets:

$$inv(p) = \{p' \mid p(X, Y) \rightarrow p'(X, Y) \in 0\}$$

$$dom(p) = \{A \mid p'(X, Y) \rightarrow type(X, A') \in 0 \, s.t., p(X, Y) \xrightarrow{g}_{\leadsto} * p'(X, Y) \, and \, type(X, A) \xrightarrow{g}_{\leadsto} * type(X, A')\}$$

$$range(p) = \{A \mid p'(X, Y) \rightarrow type(Y, A') \in 0\} \, s.t., p(X, Y) \xrightarrow{g}_{\leadsto} * p'(X, Y)$$
$$and \, type(X, A) \xrightarrow{g}_{\leadsto} * type(X, A')$$

$$follows(p) = \{p' \mid range(p) \cap dom(p') \neq \emptyset\}$$

$$inter_r\,(p) = \{p' \mid range(p) \cap range(p') \neq \emptyset \text{ or } p_1 \in inv(p')and\, dom(p_1) \cap dom(p_2) \neq \emptyset\}$$

$$inter_d(p) = \{p' \mid dom(p) \cap dom(p') \neq \emptyset \text{ or } p_1 \in inv(p), p_2 \in inv(p')and\, range(p_1) \cap range \neq \emptyset\}$$

wherein, for a given relation *p:*

> *inv(p)* is a set that contains all inverse relations of *p*.
> dom(*p*) is a set that contains a plurality of domain types for *p*. dom(*p*) preferably comprises all domain types.
> *range(p)* is a set that contains a plurality of range types for *p*. *range(p)* preferably comprises all range types.
> *follows(p)* is a set that contains a plurality of relations *p'* which can follow *p*. *follow* (*p*) preferably contains all such relations *p'*.
> *inter$_r$* (*p*) is a set that contains a plurality of relations *p'* which can intersect with p on range. *inter$_r$* (*p*) preferably contains all such relations *p'*.
> *inter$_d$* (*p*) is a set that contains a plurality of of relations *p'* which can intersect *p* on domain position. *inter$_d$* (*p*) preferably contains all such relations *p'*.

In the example, with the query shape *S* and the ontology *0*, the labeling function *f* is valid for *S* with respect to *0* if for each pair of edges e = $(n_1, n_2)$, e' = $(n_2, n_3)$ either

> *f(e')* $\in$ *follow* (*f(e)*), or
> *f(e) = type, f*($n_2$) = A and A $\in$ dom(*f(e')*), or
> *p* $\in$ *inv(f(e'))* and A $\in$ range (*p*), or
> *f(e') = type, f*($n_3$) = A and A $\in$ range(*f(e)*), or
> *p* $\in$ *inv(f(e))* and A $\in$ *dom* (*p*).

In the example, with the query shape *S* and the ontology *0*, the labeling function *f* is valid for *S* with respect to *0* if for each pair of edges e = $(n_1, n_2)$, e' = $(n_3, n_2)$ either

> *f(e')* $\in$ *inter$_r$* (*f(e)*), or
> *f(e) = type, f*($n_2$) = A, and A $\in$ *dom* (*f(e')*), or
> *p* $\in$ *inv* (*f(e')*), and A $\in$ *range* (p), or
> *f(e) = f(e') = type, f(n$_1$)* = $A_1$, *f(n$_3$)* = $A_2$ and there exists a concept *A* such that

$$A_1 \sqsubseteq^* A, A_2 \sqsubseteq^* A.$$

In the example, with the query shape *S* and the ontology *0,* the labeling function *f* is valid for *S* with respect to *0* if for each pair of edges e = $(n_1, n_2)$, e' = $(n_1, n_3)$ either

> *f(e')* $\in$ *inter$_d$* (*f(e)*), or
> *f(e) = type, f*($n_2$) = A and A $\in$ dom(*f(e')*), or
> *p* $\in$ *inv(f(e'))* and A $\in$ *range* (*p*), or
> *f(e) = f(e') = type, f*($n_2$) = $A_1$, *f*($n_3$) = $A_2$ and there exists some entity A such that

$$type(X, A_1) \xrightarrow[\rightsquigarrow]{g} * \, type(X, A)$$

> *and*

$$type(X, A_2) \xrightarrow[\rightsquigarrow]{g} * \, type(X, A)$$

In the above, the * symbol reflects that the generalization can be done via multiple axioms, e.g., *type(X, A)* $\rightarrow$ *type(X, A$_1$)* $\rightarrow$ *type(X, A'$_1$)* $\rightarrow$ *type(X, A''$_1$)* ... *type(X, A).*

This way queries are created, that are semantically meaningful.

By way of example, given the query shape

$$S = (\{n_1 \; n_2; \; n_3\}, \{e_1 = (n_1, n_2), e_2 = (n_2, n_3)g\}, n1)$$

and a labelling function $f_1$ which maps

$f_1(e_1)$ = worksAt, and
$f_1(e_2)$ = type, and
$f_1(e_3)$ = worksAt,

the labelling function $f_1(n_3)$ = company is valid with regard to the ontology $0$, while a labelling function $f_2(e_1)$ = worksAt and $f_2(e_2)$ = teachesAt is not valid with regard to the ontology $0$ because the range of worksAt and the domain of teachesAt do not intersect.

A training set comprising a plurality of training queries is for example constructed by computing each valid labeling function for each query shape, and adding data patterns that are not captured by the ontology $0$. Data patterns that are not captured by the ontology $0$ in this context may be the generalizations or spezialications thereof.

In the example, all labeled queries of a given shape $S$ that have answers over the KG is the set $Q_G$ of monadic CQs. Using the ontology $0$, the generalizations of each query are determined e.g. with the rules R1 to R6 described above. The obtained plurality of training queries contains in this example all queries that can be constructed given the ontology $0$, and the set of data patterns.

The method may comprise, choosing, for each anchor node in particular randomly, a part of the valid entities. This means that for each entity chosen as anchor, the resulting query produces certain answers over the KG 200.

Ren, H., Leskovec, J.: Beta embedding for multi-hop logical reasoning in knowledge graphs. In: Advances in Neural Information Processing Systems 33: Annual Conference on Neural Information Processing Systems 2020, NeurIPS 2020, December 6-12, 2020, virtual (2020) discloses an exemplary training method for training knowledge graph embedding models with an objective function.

The KGE model 208 is based on this method of training. In contrast to this method, the objective function for training also accounts for ontological axioms.

The method in the example aims at learning a representation of queries including their generalizations and/or specializations relying on the ontology $0$.

The method in the example aims at reducing, preferably minimizing, a distance between an embedding of a query and embedding that represents answers, i.e. positive samples, while increasing, in particular maximizing, a distance between the embedding of the query and embedding that represents non-answers, i.e. negative samples.

In the example the distance is a distance between a query box $box_q \in \mathbb{R}^d$ and an entity vector $v \in \mathbb{R}^d$ as the $L_1$ distance between $box_q$ and $v$, namely

$$d(v,q) = max(v - q_{max}, 0) + max(q_{min} - v, 0)$$

where

$$q_{max} = Cen_q + Off_q \; and \; q_{min} = Cen_q - Off_q$$

In the example, a function

$$p(d; \gamma, \sigma) = e^{-(d+\gamma)^2/\sigma^2}$$

transforms the distance into the (0,1] interval, where $\gamma \geq 0$ is a margin and $\sigma > 0$ controls a strength of a penalty.

The method aims to ensure that if a certain training query $q$ is a generalization of another query $q'$ relying on the ontology $0$, then the box $box_q$ for training query q contains a box $box_{q'}$ for the other training query $q'$.

More generally, if $a$ is an answer entity for the training query $q$ the method aims to minimize the distance not only between the answer $a$ and training query $q$ but also between the answer $a$ and the specializations of training query $q$.

In an example, a given training set of queries together with their answers is provided, as well as a plurality of generalizations of the queries or all generalizations of the queries.

For example, a set of all generalizations $Gen(q) = \{q_1, ..., q_n\}$ of a query $q$ is determined based on the ontology $0$. Then, given a training query $q$ and it's certain answer $v \in q[G, O]$ with respect to the ontology $0$, the objective function may be a loss function for $v$. Two examples of the loss function, a first loss function and a second loss function, are provided below.

The first loss function is a negative log-likelihood:

$$L = -log\big(p(d(v,q);\gamma_1,\sigma_1)\big) - \beta \sum_{i=1}^{n} log\big(p(d(v,q_i);\gamma_1,\sigma_1)\big)$$

$$- \sum_{j=1}^{k} log\left(1 - p\big(d(v'_j,q);\gamma_2,\sigma_2\big)\right)$$

where $v'_j \notin q[G, O]$ are random entities obtained via negative sampling and $\beta \geq 0$ is a fixed scalar.

The second loss function is:

$$L = -\log \sigma\big(\gamma - d^*(v,q)\big) - \sum_{j=1}^{k} \log \sigma\big(d(v'_j,q) - \gamma\big)$$

where $v \in q[G, O]$ is a certain answer of $q$ over $G$ with regard to $O$, $v'_j \notin q[G, O]$, $\gamma$ is a margin, $d^*(v, q) = \sum_{qi \in Gen(q)} \beta_i d(v, q_i)$, and $0 \leq \beta_i \leq 1$ are fixed skalars.

By way of example, the ontology $0$ may contain the rule

$O = \{teachesAt(X, Y) \rightarrow worksAt(X, Y); type(X, assist\_prof) \rightarrow type(X, professor)\}$

Then the set $Gen(q) = \{q_1, q_2, q_3\}$ of the generalizations of $q$ includes $q_1$ obtained from $q$ by substituting the conjunct *teachesAt(X, Y)* with *worksAt(X, Y)*, $q_2$, which is the query $q$ with *type(X, professor)* instead of *type(X, assist\_prof)* and $q_3$ with the first, second and third conjuncts being the same as in $q$, $q_1$, $q_2$ and respectively.

Given that the certain answer to the query $q$ over the KG $G$ with the ontology $0$ is $q[G, O] = \{p\}$, the training objective is to minimize the distance between an embedding $v_p$ of the function $p$ and an embedding $box_q$ of the query $q$ as well as the distance between the embedding $v_p$ and the boxes in the embedding space corresponding to the generalizations $q_1$, $q_2$, $q_3$ of the query $q$.

Relying on either of the two objective functions defined above and the positive and negative query samples generated using one of the methods described above, the knowledge graph embedding model 208 is trained.

The obtained knowledge graph embedding model 208 may be used to answer conjunctive queries over incomplete KGs equipped with ontologies.

The knowledge graph 200, the ontology 202 and/or the embedding model 208 may concern a state of a machine, a property of an object in a digital image or an answer to a question.

The knowledge graph 200 may represent knowledge about a mapping of status messages of a machine to a machine state. The method may comprise receiving a status message and outputting the machine state depending on the status message. The state may be determined by predicting with the knowledge graph embedding model 208 if a triple comprising a subject entity representing the status and an object entity representing the machine state exists or not. The method may comprise outputting the machine state.

For digital image processing, the knowledge graph 200 may be a description of objects recognized in an object recognition for the image. Entities in the knowledge graph 200 may represent the objects and/or properties thereof. The method may comprise receiving objects and outputting the description depending on the objects.

In a street view, an object may be a car, a person, a house or other part of an infrastructure. In the street view, the knowledge graph 200, the ontology 202 and/or the embedding model 208 may describe the object and/or a relation of the object to another object in particular in the digital image. The method may comprise receiving objects and outputting the description depending on the objects.

The method may be used for answering complex queries over incomplete KGs enhanced with ontologies. The method may be applied in the context of, e.g., digital twins in the manufacturing domain.

In Figure 3, at least a part of a device 300 for training the knowledge graph embedding model 208 of the knowledge graph 200 that is enhanced by the ontology 202 is depicted schematically. The device 300 is adapted to perform steps in the method.

The device 300 comprises at least one storage and at least one processor.

In the example, a storage 302 is configured to store the KG 200, the KGE model 208, the ontology 202, positive samples 206-1, and negative samples 206-2.

In the example a processor 304 is configured to execute the methods described above. The storage 302 may store computer readable instructions that, when executed by the processor 304, cause it to execute the methods. The processor 304 may be configured to receive the query depth 204 e.g. from the storage 302 or an interface (not depicted).

**Claims**

1. Computer-implemented method for training a knowledge graph embedding model (208) of a knowledge graph (200) that is enhanced by an ontology (202), **characterized in that** the method comprises training (2) the knowledge graph embedding model (208) with a first training query and its predetermined answer to reduce, in particular minimize, a distance between an embedding of the answer in the knowledge graph embedding model (208) and an embedding of the first training query in knowledge graph embedding model (208), and to reduce, in particular minimize, a distance between the embedding of the answer and an embedding of a second training query in knowledge graph embedding model (208), wherein the second training query is determined (1) from the first training query depending on the ontology (202).

2. The method according to claim 1, **characterized by** determining (1) a set of possible monadic consecutive queries that are consistent according to the ontology and a set of entities and a set of relations of the knowledge graph (200), and selecting the first training query from the set of monadic consecutive queries.

3. The method according to claim 2, **characterized in that** the method comprises determining the first training query according to a predetermined query shape.

4. The method according to one of the preceding claims, **characterized in that** the method comprises sampling, in particular randomly, a query, determining a generalization of the query with the ontology (202), and determining the second training query from the generalization, in particular a specialization of the generalization.

5. The method according to claim 4, **characterized by** providing a generalization depth and determining generalizations of the query up to the generalization depth and/or providing a specialization depth and determining specializations of the query up to the specialization depth.

6. The method according to one of the previous claims, **characterized by** providing an answer to a conjunctive query with the knowledge graph embedding model (208).

7. The method according to one of the previous claims, **characterized by** training the knowledge graph embedding (208) to increase, in particular maximize, a distance between the embedding of the first training query and at least one embedding of a predetermined entity that is not an answer to the first training query and/or to increase, in particular maximize, a distance between the embedding of the second training query and at least one embedding of a predetermined entity that is not an answer to the second training query.

8. Device (300) for training a knowledge graph embedding model (208) of a knowledge graph (200) that is enhanced by an ontology (202), **characterized in that** the device (300) is adapted to perform steps in the method according to one of the claims 1 to 7.

9. Computer program, **characterized in that** the computer program comprises computer readable instructions that when executed by a computer cause the computer to perform a method according to one of the claims 1 to 7.

Bosch

worksAt

?

employedIn

? — type → IT_Department

**Fig. 1**

200 → 1 → 206-1 / 206-2 → 2 → 208

204

202

**Fig. 2**

302    304    300

**Fig. 3**

**EUROPEAN SEARCH REPORT**

Europäisches
Patentamt
European
Patent Office
Office européen
des brevets

Application Number

**EP 21 18 1822**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ren Hongyu ET AL: "Query2box: Reasoning over Knowledge Graphs in Vector Space using Box Embeddings", , 29 February 2020 (2020-02-29), XP055871280, Retrieved from the Internet: URL:https://arxiv.org/pdf/2002.05969.pdf [retrieved on 2021-12-09] * Abstract; Section 3, in particular the "Training objective" subsection of Section 3.2; Section 4.2.; figure 4 * | 1-9 | INV. G06N3/08 G06N5/02 G06N5/04 |

TECHNICAL FIELDS SEARCHED (IPC)

**G06N**

The present search report has been drawn up for all claims

| Place of search | Date of completion of the search | Examiner |
|---|---|---|
| The Hague | 10 December 2021 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARTALE, A. ; CALVANESE, D. ; KONTCHAKOV, R. ; ZAKHARYASCHEV, M.** The DL-lite family and relations. *CoRR abs/1401.3487,* 2014
- **YAHYA, M. ; BERBERICH, K. ; ELBASSUONI, S. ; RAMANATH, M. ; TRESP, V. ; WEIKUM, G.** Deep answers for naturally asked questions on the web of data. *Proceedings of the 21st World Wide Web Conference, WWW 2012,* 16 April 2012, 445-449
- **REN, H. ; HU, W. ; LESKOVEC, J.** Query2box: Reasoning over knowledge graphs in vector space using box embedding. *ICLR. OpenReview.net,* 2000

- **ARTALE, A. ; CALVANESE, D. ; KONTCHAKOV, R. ; ZAKHARYASCHEV, M.** The dl-lite family and relations. *CoRR abs/1401.3487,* 2014
- **REN, H. ; LESKOVEC, J.** Beta embedding for multi-hop logical reasoning in knowledge graphs. *Advances in Neural Information Processing Systems 33: Annual Conference on Neural Information Processing Systems 2020, NeurIPS,* 06 December 2020